# EUROPEAN PATENT APPLICATION

(11) **EP 3 306 544 A1**
(43) Date of publication of application: **11.04.2018**
(21) Application number: 15893455.4
(22) Date of filing: 08.12.2015
(51) Int. Cl.: G06Q 20/08, G06Q 20/22

(54) **PROXY PAYMENT DEVICE AND OPERATION METHOD THEREFOR**

(30) Priority: 26.05.2015 KR 20150072836
(71) Applicant: SK Planet Co., Ltd., Seongnam-si, Gyeonggi-do 13487 (KR)
(72) Inventor: KIM, Ju Tae, Seongnam-si Gyeonggi-do 13532 (KR)
(74) Representative: Isarpatent
(86) International application number: PCT/KR2015/013353
(87) International publication number: WO 2016/190503

(57) **Abstract**

The present disclosure provides an agency payment device and an operating method thereof which process an agency payment with respect to a purchaser through a method in which agency payment identification information previously generated by a payer is verified from the purchaser when the purchaser requests the agency payment such that intervention of the payer is not required in a process procedure of the agency payment.

## Description

### [Technical Field]

The present disclosure relates to a method for processing an agency payment on behalf of a purchaser through a verification of agency payment identification information, which is previously generated by a payer, from the purchaser when the purchaser requests agency payment.

### [Background Art]

As a payment method in a general commercial transaction or an electronic commerce, a credit card, a debit card, a deposit through a bank account, and the like are generally used. However, there may be many inconvenience and technical problems.

For example, when a purchaser pays a specific service fee and a specific product purchasing rate in offline, she and/or he may be in trouble if she and/or he has no means of payment or if an insufficient amount of money is in the account.

Moreover, some people cannot have a credit card, such as juveniles with no incoming or persons for other reasons. For these people, electronic commerce is impossible.

In addition, sometimes a credit card is inevitably used by other people when purchasing a product or paying in a restaurant. In this case, credit card information may be disclosed to others, to cause security threats.

### [Disclosure]

### [Technical Problem]

To address the above described problems, an object of the present disclosure is to provide a method for processing an agency payment with respect to a purchaser through a verification of agency payment identification information, which is previously generated by a payer, from the purchaser when the purchaser requests agency payment.

### [Technical Solution]

To attain the above described object, an agency payment device according to one embodiment of the present disclosure includes a receiving unit configured to receive agency payment identification information and agency payment request detail information in connection with an agency payment request of a purchaser, a determination unit configured to determine whether an agency payment with respect to an agency payment request sum included in the agency payment request detail information is possible on the basis of agency payment restriction information designated by a payer when the agency payment identification information is verified to be consistent with specific agency payment identification information generated by the payer, and a processing unit configured to process an agency payment with respect to the agency payment request sum using a registered payment means of the payer when the agency payment is determined to be possible.

More particularly, the agency payment restriction information includes at least one among agency payment permissible period, agency payment permissible place, and agency payment permissible limit designated by the payer.

More particularly, the determination unit determines that the agency payment is possible in a case in which an agency payment request time point included in the agency payment request detail information is within the agency payment permissible period, an agency payment request place included in the agency payment request detail information is the agency payment permissible place, or the agency payment request sum is within the agency payment permissible limit.

More particularly, when receiving agency payment identification information generated by a first payer and agency payment identification information generated by a second payer together in connection with the agency payment request of the purchaser, the processing unit processes the agency payment with respect to at least sum of the agency payment request sum using a registered payment means of the first payer, and with respect to the remaining sum except the at least sum of the agency payment request sum using a registered payment means of the second payer.

More particularly, the at least sum includes a sum of the agency payment request sum within the agency payment permissible limit related to the first payer, and the remaining sum includes a sum of the agency payment request sum exceeding the agency payment permissible limit related to the first payer.

More particularly, the at least sum and the remaining sum are divided and determined from the agency payment request sum according to an agency payment process ratio designated by the purchaser or the payer.

To attain the above described object, an agency payment device according to one embodiment of the present disclosure includes a receiving unit configured to receive agency payment identification information and purchaser identification information in connection with an agency payment request of a purchaser, and a processing unit configured to process an agency payment with respect to the purchaser using a registered payment means of a payer when the agency payment identification information is consistent with specific agency payment identification information generated by the payer on the basis of the purchaser identification information.

To attain the above described object, an operating method of an agency payment device according to one embodiment of the present disclosure includes receiving agency payment identification information and an agency payment request detail information in connection with an agency payment request of a purchaser, determining whether an agency payment with respect to an agency payment request sum included in the agency payment request detail information is possible on the basis of agency payment restriction information designated by a payer when the agency payment identification information is verified to be consistent with specific agency payment identification information generated by the payer, and processing an agency payment with respect to the agency payment request sum using a registered payment means of the payer when the agency payment is determined to be possible.

More particularly, the agency payment restriction information includes at least one among an agency payment permissible period, an agency payment permissible place, and an agency payment permissible limit which are designated by the payer.

More particularly, the determining determines that the agency payment is possible in a case in which an agency payment request time point included in the agency payment request detail information is within the agency payment permissible period, an agency payment request place included in the agency payment request detail information is the agency payment permissible place, or the agency payment request sum is within the agency payment permissible limit.

More particularly, when receiving agency payment identification information generated by a first payer and agency payment identification information generated by a second payer together in connection with the agency payment request of the purchaser, the processing processes the agency payment with respect to at least sum of the agency payment request sum using a registered payment means of the first payer, and with respect to the remaining sum except the at least sum of the agency payment request sum using a registered payment means of the second payer.

### [Advantageous Effects]

Therefore, in accordance with an agency payment device and an operating method thereof, an agency payment with respect to a purchaser is processed through a method in which agency payment identification information previously generated by a payer is verified from the purchaser when the purchaser requests the agency payment such that there is attained an effect in which intervention of the payer is not required in a process procedure of the agency payment.

### [Description of Drawings]

FIG. 1 is a schematic configuration diagram of an agency payment service system according to one embodiment of the present disclosure.
FIG. 2 is a configuration diagram for describing an agency payment device according to one embodiment of the present disclosure.
FIG. 3 is a schematic configuration diagram of a hardware system for implementing the agency payment device according to one embodiment of the present disclosure.
FIG. 4 is a flow chart for describing an operation flow in which agency payment identification information is generated in the agency payment device according to one embodiment of the present disclosure.
FIG. 5 is a flow chart for describing an operation flow in which an agency payment is processed in the agency payment device according to one embodiment of the present disclosure.
FIG. 6 is a flow chart for describing an operation flow in which agency payment identification information is generated in an agency payment device according to another embodiment of the present disclosure.
FIG. 7 is a flow chart for describing an operation flow in which an agency payment is processed in the agency payment device according to another embodiment of the present disclosure.

### [Best Mode]

It is noted that the technical terms used herein are used only to describe specific embodiments and are not intended to limit the scope of the teachings disclosed herein. Also, the technical terms used herein should be interpreted in a sense that is generally understood by a person having ordinary skill in the art to which the presently disclosed technology belongs, unless the context clearly dictates otherwise and should not be construed in a broader sense or in an oversimplified sense. In addition, where technical terms used herein are inappropriate to exactly express the technical idea disclosed herein, they should be replaced with technical terms that allow the person in the art to properly understand. Also, the general terms used in the present disclosure should be interpreted in accordance with definitions in the dictionary and the predefined or prior context, and should not be construed as being excessively reduced in meaning.

As used herein, the singular form of "a," "an," and "the" include plural references unless the context clearly dictates otherwise. As used herein, the terms "consisting of," "comprising," etc., should not be construed as necessarily including all of the elements or steps listed thereafter, but some of the elements or steps may be omitted or additional elements or steps may further be included.

Furthermore, the terms first, second and the like in the description and in the claims are used for distinguishing between similar elements and not necessarily for describing a sequential or chronological order. The terms are used only for distinguishing one component from another component. The terms so used are interchangeable under appropriate circumstances, e.g., a first component may be referred to as a second component and vice versa without departing from the scope of the present disclosure.

In the following detailed description, exemplary embodiments of the present disclosure will be described in detail with reference to the accompanying drawings. Throughout the drawings, like elements will be denoted by the same reference numerals and redundant descriptions will be omitted.

Detailed descriptions of well-known functions and structures incorporated herein will be omitted to avoid obscuring the gist of the technology disclosed herein. In addition, it is to be noted that the accompanying drawings are provided merely to facilitate understanding of the technical idea disclosed herein and that the scope of the technical idea is not limited thereby.

Hereinafter, an exemplary embodiment of the present disclosure will be described with reference to the accompanying drawings.

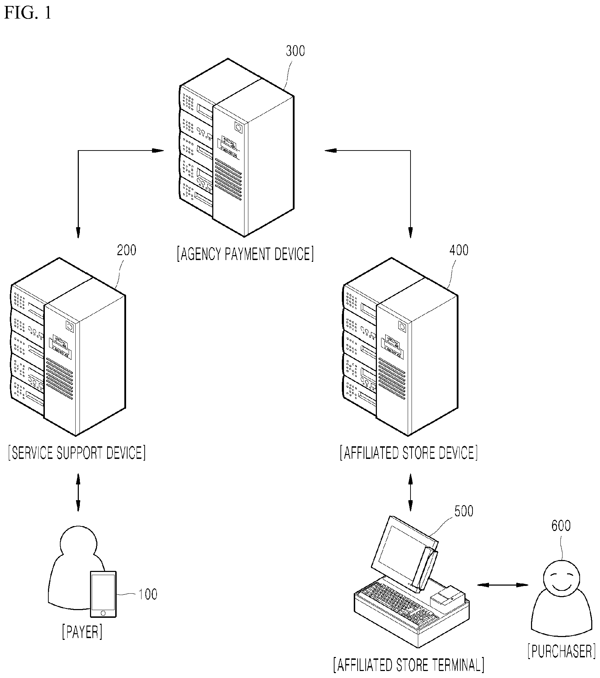

FIG. 1 is a schematic configuration diagram of an agency payment service system according to one embodiment of the present disclosure.

As shown in FIG. 1, an agency payment service system according to one embodiment of the present disclosure may have a configuration including a service support device 200 for supporting agency payment identification information with respect to a payer 100, an agency payment device 300 for processing an agency payment with respect to a purchaser 600, an affiliated store device 400 for transmitting an agency payment request from the purchaser 600, and an affiliated store terminal 500.

The service support device 200 refers to a server for supporting a generation of the agency payment identification information with respect to the payer 100 by interlocking with the agency payment device 300, and, for example, may include an automatic response system (ARS).

The agency payment device 300 refers a server for processing the agency payment with respect to the purchaser 600 through a verification of the agency payment identification information, which is generated with respect to the payer 100 by interlocking with the service support device 200, from the purchaser 600.

The affiliated store device 400 refers to a device for transmitting the agency payment request from the purchaser 600 to the agency payment device 300, and, for example, may correspond to a server operated in an affiliated store.

Like the affiliated store device 400, the affiliated store terminal 500 refers to a device for transmitting the agency payment request from the purchaser 600 to the agency payment device 300, and, for example, may correspond to a point of sales (POS) terminal installed at the affiliated store.

Meanwhile, in accordance with one embodiment of the present disclosure, an agency payment method is performed such that the payer 100 located at a remote site pays for cost with respect to a purchase behavior of the purchaser 600.

Generally, in such an agency payment method, a method is performed such that the purchaser 600 confirms a product purchasing or a service and then the payer 100 pays a confirmed payment amount at a remote site.

In the above described agency payment method, a final payment may be performed through a process of verifying payment intent of the payer 100 after the payment amount with respect to the purchaser 600 is confirmed.

Consequently, to normally perform the agency payment, intervention of the payer 100 is necessary in the process of the agency payment with respect to the purchaser 600.

Thus, the purchaser 600 stands by until the agency payment is completed by the payer 100 so as to complete a purchasing, and moreover, there may occur a situation in which a purchasing is delayed or is impossible due to the intervention of the payer 100 such that all purchasing behaviors until now are canceled.

Therefore, in one embodiment of the present disclosure, a method for processing an agency payment without intervention of the payer 100 is provided, and the agency payment device 300, which is a configuration in the agency payment service system for implementing the method, will be described in detail below.

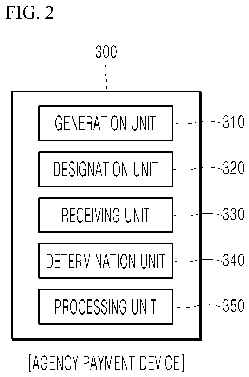

A configuration of the agency payment device 300 according to one embodiment of the present disclosure will be described in detail with reference to FIG. 2.

As shown in FIG. 2, the agency payment device 300 according to one embodiment of the present disclosure may have a configuration including a generation unit 310 for generating agency payment identification information of the payer 100, a designation unit 320 for designating agency payment restriction information for restricting an agency payment, a receiving unit 330 for receiving an agency payment request from the purchaser 600, a determination unit 340 for determining whether a process of an agency payment is possible, and a processing unit 350 for processing the agency payment.

An entire configuration or at least a portion of the agency payment device 300 including the generation unit 310, the designation unit 320, the receiving unit 330, the determination unit 340, and the processing unit 350, which are described above, may be implemented in the form of a software module executed by a processor, a hardware module, or a combination thereof.

Therefore, the agency payment device 300 according to one embodiment of the present disclosure processes the agency payment with respect to the purchaser 600 without intervention of the payer 100 through the above described configuration, and each configuration of the agency payment device 300 for processing the agency payment will be described in detail below.

The generation unit 310 serves to generate agency payment identification information with respect to the payer 100.

More particularly, when the service support device 200 requests generation of the agency payment identification information with respect to the payer 100, the generation unit 310 generates the agency payment identification information requested for processing an agency payment with respect to the purchaser 600.

Here, the agency payment identification information may be designated as, for example, as a number that is arbitrarily designated by the payer 100, a number that is implicitly shared with the payer 100 and the purchaser 600, or as a number that is automatically designated on the system.

Meanwhile, in order for the generation unit 310 to receive a generation request of the agency payment identification information from the service support device 200, operations of the affiliated store device 400 and the affiliated store terminal 500 may be intervened.

That is, when the purchaser 600 requests a transmission of connection information (for example, a primary phone number of an affiliated store) of the service support device 200, which is assigned to the affiliated store device 400, to the payer 100 through the affiliated store terminal 500, the affiliated store device 400 transmits the connection information (for example, a primary phone number of an affiliated store) of the service support device 200 to the payer 100.

Therefore, the payer 100 may connect to the service support device 200 (for example, through a connection of an ARS voice call and an outgoing of a short message service (SMS)) using the connection information (for example, the primary phone number of the affiliated store) received from the affiliated store device 400, and then the agency payment identification information may be generated according to a series of processes which are guided by the service support device 200.

At this point, the generation unit 310 receives identification information (for example, a phone number) of the payer 100, the connection information (for example, the primary phone number of the affiliated store) of the service support device 200, and an agency payment permissible period and an agency payment permissible limit, which are designated by the payer 100, from the service support device 200.

Here, the identification information (for example, the phone number) of the payer 100 may be used to verify whether the agency payment identification information of the payer 100 is consistent at the determination unit 340.

Further, the connection information (for example, the primary phone number of the affiliated store) of the service support device 200 may be used to designate an agency payment permissible place that is place (for example, the affiliated store) at which the agency payment is permissible at the designation unit 320 in the following process. Such an agency payment permissible place may be used as the agency payment restriction information for restricting the agency payment with respect to the purchaser 600 together with the agency payment permissible period and the agency payment permissible limit, which are described above.

Meanwhile, to process the agency payment with respect to the purchaser 600, it is an essential prerequisite that payment means (for example, a credit card and payment points) of the payer 100 should be registered in advance.

For this purpose, when the payment means of the payer 100 is not registered, the generation unit 310 receives the payment means of the payer 100 through the service support device 200 and registers the received payment means to transmit the registered information to the processing unit 350.

The designation unit 320 serves to designate the agency payment restriction information.

More particularly, when generation of the agency payment identification information with respect to the payer 100 is completed, the designation unit 320 stores the agency payment restriction information for restricting the agency payment with respect to the purchaser 600.

In this connection, the designation unit 320 receives the agency payment identification information, the identification information (for example, the phone number) of the payer 100, the connection information (for example, the primary phone number of the affiliated store) of the service support device 200, and the agency payment permissible period and the agency payment permissible limit, which are designated by the payer 100, from the generation unit 310.

At this point, the designation unit 320 uses the connection information (for example, the primary phone number of the affiliated store) of the service support device 200 as the agency payment permissible place that is a place (for example, affiliated store) at which the agency payment is permissible. The designation unit 320 designates such an agency payment permissible place together with the agency payment permissible period and the agency payment permissible limit as the agency payment restriction information for restricting the agency payment of the purchaser 600.

Further, when the designation of the agency payment restriction information is completed, the designation unit 320 transmits the agency payment identification information to the purchaser 600, and also maps agency payment information and the agency payment identification information of the payer 100 transmitted from the generation unit 310 to the identification information (for example, the phone number) of the payer 100 to transmit the mapped information to the determination unit 340.

Here, the agency payment identification information may be transmitted to the purchaser 600 through a variety of methods including, for example, an SMS, an application (for example, a social network service (SNS)), and the like.

When the payer 100 and the purchaser 600 use the same specific service, the agency payment identification information may be transmitted to the purchaser 600 through a network managed by a provider providing the specific service. Specifically, it may predict that the agency payment identification information transmitted to the purchaser 600 may be represented in the form of 'a bar code.'

For reference, the agency payment identification information may be orally transmitted between the payer 100 and the purchaser 600 without a separate transmission process in the agency payment device 300.

The receiving unit 330 serves to receive an agency payment request with respect to the purchaser 600.

More particularly, when the agency payment is requested from the purchaser 600, the receiving unit 330 receives the agency payment request with respect to the purchaser 600 through the affiliated store terminal 500 and the affiliated store device 400.

At this point, the receiving unit 330 receives the identification information (for example, the phone number) of the payer 100, the agency payment identification information recognized by the purchaser 600 in advance, and agency payment request detail information through the affiliated store terminal 500 and the affiliated store device 400, and then transmits the received information to the determination unit 340.

Here, the agency payment request detail information may include an agency payment request time point that is a time point at which the agency payment is requested by the purchaser 600, an agency payment request place at which purchase behavior related to the agency payment is performed, and an agency payment request sum that is a sum to be paid due to the purchase behavior.

For reference, the identification information (for example, the phone number) of the payer 100 may be received through a method, for example, in which the purchaser 600 inputs through a keypad provided at the affiliated store terminal 500. Also, the agency payment identification information may be received through methods, for example, in which the purchaser 600 inputs through a keypad provided at the affiliated store terminal 500 and the affiliated store terminal 500 recognizes the agency payment identification information in the form of a bar code.

The determination unit 340 serves to determine whether the agency payment with respect to the purchaser 600 is possible.

More particularly, when receiving the identification information (for example, the phone number) of the payer 100, the agency payment identification information recognized by the purchaser 600 in advance, and the agency payment request detail information, the determination unit 340 determines whether the agency payment with respect to the purchaser 600 is possible using the received information.

That is, the determination unit 340 firstly verifies whether the agency payment identification information mapped to the identification information (for example, the phone number) of the payer 100 is consistent with the agency payment identification information received from the purchaser 600, and then, when the agency payment identification information is verified to be consistent, it determines whether the agency payment with respect to the agency payment request sum included in the agency payment request detail information is possible using the agency payment restriction information mapped to the identification information (for example, the phone number) of the payer 100.

At this point, the determination unit 340 may determine that the agency payment with respect to the agency payment request sum is possible in only a case, for example, in which the agency payment request time point included in the agency payment request detail information is within the agency payment permissible period, the agency payment request place included in the agency payment request detail information is the agency payment permissible place, and the agency payment request sum is within the agency payment permissible limit.

The processing unit 350 serves to process the agency payment with respect to the purchaser 600.

More particularly, when the agency payment with respect to the purchaser 600 is determined to be possible, the processing unit 350 processes the agency payment with respect to the agency payment request sum included in the agency payment request detail information using the payment means previously registered with respect to the payer 100.

At this point, when the process of the agency payment is completed, the processing unit 350 transmits the process result of agency payment to the purchaser 600 through the affiliated store device 400 and the affiliated store terminal 500, and may additionally transmit the process result of agency payment to the payer 100 as necessary.

Meanwhile, it is assumed that the purchaser 600 may recognize agency payment identification information generated by two or more payers with respect to the same affiliated store instead of recognizing the agency payment identification information of the single payer 100.

For convenience, it is a premise that the purchaser 600 recognizes agency payment identification information generated with respect to a first payer and agency payment identification information generated with respect to a second payer.

As such, when recognizing the agency payment identification information generated with respect to the first payer and the second payer, the purchaser 600 may receive the agency payment identification information generated with respect to the first payer and agency payment identification information generated with respect to the second payer.

In this case, a portion of a sum of the agency payment request sum included in the agency payment request detail information may be processed with the agency payment using a payment means of the first payer, which is previously registered, and the remaining sum may be processed with the agency payment using a payment means of the second payer, which is previously registered.

At this point, it may be predicted that the portion of the sum processed using the registered payment means of the first payer is within the agency payment permissible limit defined in the agency payment restriction information of the first payer of the agency payment request sum. Also, it may be predicted that the remaining sum processed using the registered payment means of the second payer exceeds the agency payment permissible limit defined in the agency payment restriction information of the first payer of the agency payment request sum.

Of course, when the sum is able to be processed using the registered payment means of each of the first payer and the second payer, instead of the method determined according to whether the agency payment permissible limit is exceeded as the above described example, a division of the sum may be designated by the purchaser 600, or may be determined with respect to the registered payment means of each of the first payer and the second payer from the agency payment request sum according to an agency payment process ratio designated in the agency payment device 300.

It is mentioned that each configuration of the agency payment device 300 described above may be implemented in the form of a software module executed by a processor, a hardware module, or a combination thereof.

As such, the software module executed by the processor, the hardware module, or the combination thereof may be implemented with a hardware system (for example, a computer system).

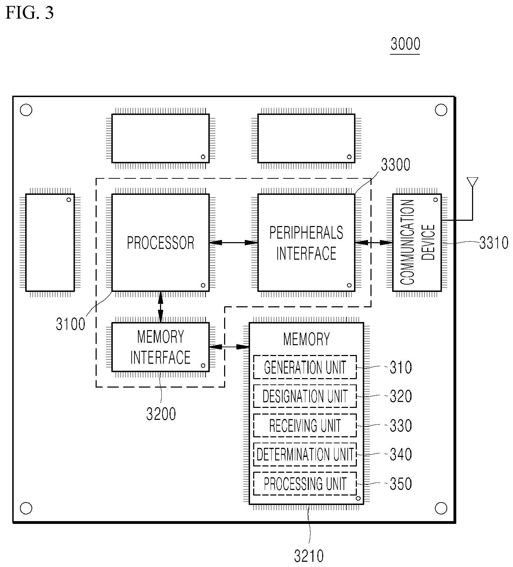

Therefore, a hardware system 3000 for implementing the agency payment device 300 according to one embodiment of the present disclosure will be described below with reference to FIG. 3.

For reference, it should be understood that the following description is one example for implementing each configuration of the agency payment device 300 described above in the hardware system 3000, and each configuration and an operation thereof may be different from those of an actual system.

FIG. 3 is a diagram illustrating a configuration of the hardware system 3000 for implementing the agency payment device 300 according to one embodiment of the present disclosure.

As shown in FIG. 3, the hardware system 3000 according to one embodiment of the present disclosure may have a configuration including a processor 3100, a memory interface 3200, and a peripherals interface 3300.

Each configuration of such a hardware system 3000 may be an individual component or may be integrated on one or more integrated circuits, and it may be coupled to a bus system (not shown).

Here, the bus system is one or more arbitrary individual physical buses connected by appropriate bridges, adapters, and/or controllers, communication lines, communication interfaces, and/or multi-drop buses, or an abstraction representing point-to-point connections.

The processor 3100 serves to execute various software modules stored in a memory 3210 so as to perform various function in the hardware system 3000 by communicating with the memory 3210 through the memory interface 3200.

Here, the generation unit 310, the designation unit 320, the receiving unit 330, the determination unit 340, and the processing unit 350, each of which is the configuration in the agency payment device 300 described above with reference to FIG. 2, may be stored in the memory 3210 in the form of a software module, and an operation system may be additionally stored in the memory 3210.

The above described operation system (for example, an embedded operating system such as iOS, Android, Darwin, RTXC, LINUX, UNIX, OS X, WINDOWS, or VxWorks) includes various procedures, command sets, software components and/or drivers for controlling and managing general system works (for example, a memory management, a storage device management, a power management, and the like), and serves to facilitate communications between various hardware modules and various software modules.

For reference, the memory 3210 includes a cache, a main memory, and a secondary memory, but it is not limited thereto, and may include a memory hierarchy structure. The memory hierarchy structure may be implemented through an arbitrary combination of a random-access memory (RAM) (for example, a static RAM (SRAM), a dynamic RAM (DRAM), and a display data RAM (DDRAM)), a read-only memory (ROM), a flash memory, and a magnetic and/or optical storage device (for example, a disc drive, a magnetic tape, a compact disk (CD), a digital video disc (DVD), and the like).

The peripherals interface 3300 serves to enable the processor 3100 to communicate with peripherals.

The peripherals provide different functions to a computer system, and may include, for example, a communication device 3310 in one embodiment of the present disclosure.

Here, the communication device 3310 serves to provide a communication function with other devices. For this purpose, the communication device 3310 includes, for example, an antenna system, a radio frequency (RF) transceiver, one or more amplifiers, a tuner, one or more oscillators, a digital signal processor, a codec chipset, a memory, and the like, but it is not limited thereto, and it may include a known circuit performing the communication function.

A protocol supported by such a communication device 3310 corresponds to a protocol for a long term evolution (LTE), a time division multiple access (TDMA), a code division multiple access (CDMA), a global system for mobile communications (GSM), an enhanced data GSM environment (EDGE), a wideband code division multiple access (W-CDMA), a Wi-Fi(IEEE 802.11a, IEEE 802.11b, IEEE 802.11g, IEEE 802.11n, and/or the like), Bluetooth, a Wi-MAX, a voice over internet protocol (VoIP), an e-mail, an instant messaging, and an SMS, but it is not limited thereto, and it may include all protocols providing a communication environment with other devices.

Therefore, each configuration in the agency payment device 300, which is stored in the memory 3210 in the form of the software module, may perform a communication with the communication device 3310 by the medium of the memory interface 3200 and the peripherals interface 3300 when each configuration is executed by the processor 3100, thereby processing the agency payment with respect to the purchaser 600.

Hereinafter, each configuration in the hardware system 3000, which is related to the agency payment device 300, will be described in detail with reference to FIG. 3. For convenience of a description, it is a premise that each configuration in the agency payment device 300, which is stored in the memory 3210 in the form of the software module, is in an executed state by the processor 3100.

The generation unit 310 generates agency payment identification information with respect to the payer 100.

More particularly, when generation of the agency payment identification information with respect to the payer 100 is requested from the service support device 200 through the communication device 3310, the generation unit 310 generates the agency payment identification information required for processing an agency payment with respect to the purchaser 600.

At this point, the generation unit 310 receives identification information (for example, the phone number) of the payer 100, connection information (for example, a primary phone number of an affiliated store) of the service support device 200, and an agency payment permissible period and an agency payment permissible limit, which are designated by the payer 100, from the service support device 200.

Therefore, when generation of the agency payment identification information with respect to the payer 100 is completed, the generation unit 310 transmits the generated agency payment identification information, the identification information (for example, the phone number) of the payer 100, the connection information (for example, the primary phone number of the affiliated store) of the service support device 200, and the agency payment permissible period and the agency payment permissible limit, which are designated by the payer 100, to the designation unit 320.

The designation unit 320 serves to designate agency payment restriction information.

More particularly, when the generation of the agency payment identification information with respect to the payer 100 is completed, the designation unit 320 designates the agency payment restriction information for restricting the agency payment with respect to the purchaser 600.

At this time, the designation unit 320 receives the agency payment identification information, the identification information (for example, the phone number) of the payer 100, the connection information (for example, the primary phone number of the affiliated store) of the service support device 200, and the agency payment permissible period and the agency payment permissible limit, which are designated by the payer 100, from the generation unit 310.

Therefore, the designation unit 320 uses the connection information (for example, a primary phone number of an affiliated store) of the service support device 200 as an agency payment permissible place at which the agency payment is allowed (that is, the affiliated store), and designates the agency payment permissible place together with the agency payment permissible period and the agency payment permissible limit as the agency payment restriction information for restricting the agency payment of the purchaser 600.

Further, when the designation of the agency payment restriction information is completed, the designation unit 320 transmits the agency payment identification information to the purchaser 600 through the communication device 3310. Also, the designation unit 320 maps the agency payment information and the agency payment identification information of the payer 100, which is transmitted from the generation unit 310, to the identification information (for example, the phone number) of the payer 100 and transmits the mapped information to the determination unit 340.

The receiving unit 330 serves to receive an agency payment request with respect to the purchaser 600.

More particularly, when the agency payment is requested from the purchaser 600 through the communication device 3310, the receiving unit 330 receives the identification information (for example, the phone number) of the payer 100, the agency payment identification information previously recognized by the purchaser 600, and agency payment request detail information, and transmits the received information to the determination unit 340.

The determination unit 340 serves to determine whether the agency payment with respect to the purchaser 600 is possible.

More particularly, when receiving the identification information (for example, the phone number) of the payer 100, the agency payment identification information previously recognized by the purchaser 600, and the agency payment request detail information from the receiving unit 330 which receives the agency payment request of the purchaser 600, the determination unit 340 determines whether the agency payment with respect to the purchaser 600 is possible using the received information.

At this point, the determination unit 340 firstly determines whether the agency payment identification information mapped to the identification information (for example, the phone number) of the payer 100 is consistent with the agency payment identification information received from the purchaser 600. When the agency payment identification information is determined to be consistent, the determination unit 340 determines whether the agency payment with respect to an agency payment request sum included in the agency payment request detail information is possible using the agency payment restriction information mapped to the identification information (for example, the phone number) of the payer 100.

In this connection, the determination unit 340 may determine that the agency payment with respect to the agency payment request sum is possible in only a case, for example, in which an agency payment request time point included in the agency payment request detail information is within an agency payment permissible period, the agency payment request place included in the agency payment request detail information is the agency payment permissible place, and the agency payment request sum is within an agency payment permissible limit.

The processing unit 350 serves to process the agency payment with respect to the purchaser 600.

More particularly, when receiving the determination result in which the agency payment with respect to the purchaser 600 is possible from the determination unit 340, the processing unit 350 processes the agency payment with respect to the agency payment request sum included in the agency payment request detail information using the registered payment means with respect to the payer 100.

At this point, when the process of the agency payment is completed, the processing unit 350 transmits the process result of the agency payment to the purchaser 600 through the communication device 3310, the affiliated store device 400, and the affiliated store terminal 500, and may additionally transmit the process result of the agency payment to the payer 100 as necessary.

As described above, in accordance with the operation flow of the agency payment device 300 and the hardware system 3000 for implementing the agency payment device 300 according to one embodiment of the present disclosure, when the purchaser 600 requests the agency payment, the agency payment with respect to the purchaser 600 is processed through a method in which the agency payment identification information previously generated by the payer 100 is verified by the purchaser 600 such that intervention of the payer 100 is not required in the process procedure of the agency payment.

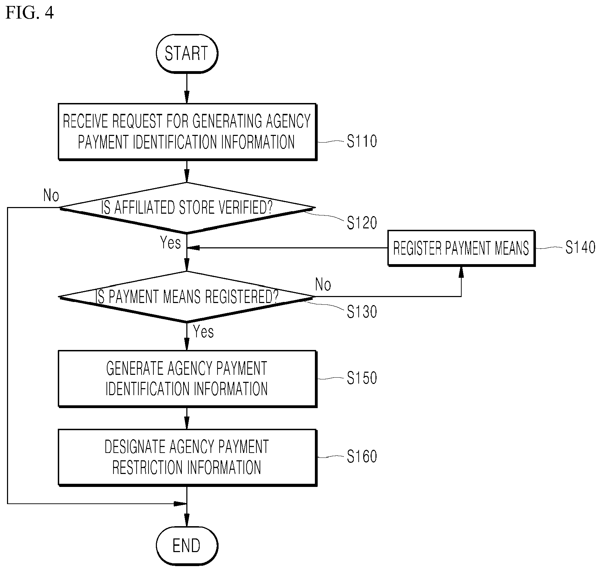

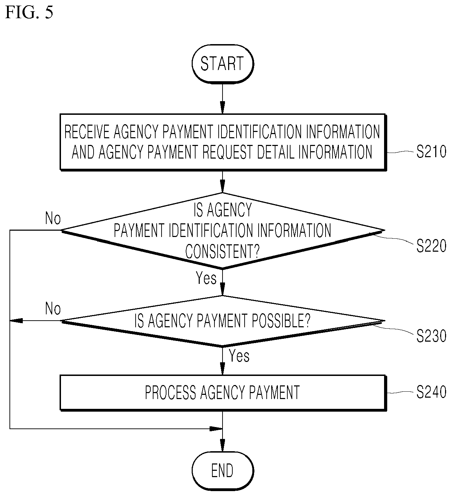

Hereinafter, an operation flow in the agency payment device 300 according to one embodiment of the present disclosure will be described with reference to FIGS. 4 and 5.

For convenience of a description, the above described configurations shown in FIGS. 1 to 3 are described by referring to corresponding reference numbers.

Firstly, an operation flow for generating the agency payment identification information in the agency payment device 300 according to one embodiment of the present disclosure will be described below with reference to FIG. 4.

When generation of agency payment identification information with respect to the payer 100 is requested from the service support device 200, the generation unit 310 firstly generates agency payment identification information required for processing an agency payment with respect to the purchaser 600 in Operations S110 to S160.

At this point, the generation unit 310 receives identification information (for example, a phone number) of the payer 100, connection information (for example, a primary phone number of an affiliated store) of the service support device 200, and an agency payment permissible period, and the agency payment permissible limit, which are designated by the payer 100, from the service support device 200.

Here, the generation unit 310 verifies an affiliated store capable of processing the agency payment from the connection information (for example, the primary phone number of the affiliated store) of the service support device 200 in Operation S120. When the affiliated store is not verified from the connection information (for example, the primary phone number of the affiliated store) of the service support device 200, the generation unit 310 terminates a generation procedure of the agency payment identification information.

Meanwhile, to process the agency payment with respect to the purchaser 600, it is a premise that a payment means (for example, a credit card and payment points) of the payer 100 should be previously registered.

For this purpose, when the payment means of the payer 100 is not registered through Operations S130 and S140, the generation unit 310 receives the payment means of the payer 100 from the service support device 200, registers the received payment means, and transmits the registered information to the processing unit 350.

Thereafter, when the generation of the agency payment identification information with respect to the payer 100 is completed, the designation unit 320 designates agency payment restriction information for restricting the agency payment with respect to the purchaser 600 in Operation S160.

In this connection, the designation unit 320 receives the agency payment identification information, the identification information (for example, the phone number) of the payer 100, the connection information (for example, a primary phone number of an affiliated store) of the service support device 200, and the agency payment permissible period and the agency payment permissible limit, which are designated by the payer 100, from the generation unit 310.

At this point, the designation unit 320 uses the connection information (for example, a primary phone number of an affiliated store) of the service support device 200 as the agency payment permissible place at which the agency payment is allowed (that is, the affiliated store), and designates the agency payment permissible place together with the agency payment permissible period and the agency payment permissible limit as the agency payment restriction information for restricting the agency payment of the purchaser 600.

Further, when the designation of the agency payment restriction information is completed, the designation unit 320 transmits the agency payment identification information to the purchaser 600, and also maps the agency payment information and the agency payment identification information of the payer 100, which is transmitted from the generation unit 310, to the identification information (for example, the phone number) of the payer 100 to transmits the mapped information to the determination unit 340.

Hereinafter, an operation flow for processing the agency payment in the agency payment device 300 according to one embodiment of the present disclosure will be described below with reference to FIG. 5.

Firstly, when the agency payment is requested from the purchaser 600, the receiving unit 330 receives the agency payment request with respect to the purchaser 600 through the affiliated store terminal 500 and the affiliated store device 400 in Operation S210.

At this point, the receiving unit 330 receives the identification information (for example, the phone number) of the payer 100, the agency payment identification information previously recognized by the purchaser 600, and the agency payment request detail information through the affiliated store terminal 500 and the affiliated store device 400, and transmits the received information to the determination unit 340.

Here, the agency payment request detail information may include the agency payment request time point that is a time point at which the agency payment is requested from the purchaser 600, the agency payment request place at which purchase behavior related to the agency payment is performed, and the agency payment request sum that is the sum to be paid due to the purchase behavior.

For reference, the identification information (for example, the phone number) of the payer 100 may be received through, for example, a method in which the purchaser 600 inputs through a keypad provided at the affiliated store terminal 500. The agency payment identification information may be received through, for example, methods in which the purchaser 600 inputs through the keypad provided at the affiliated store terminal 500 and the agency payment identification information in the form of a bar code is recognized at the affiliated store terminal 500.

Thereafter, when receiving the identification information (for example, the phone number) of the payer 100, the agency payment identification information previously recognized by the purchaser 600, and the agency payment request detail information from the receiving unit 330 that receives the agency payment request of the purchaser 600, the determination unit 340 determines whether the agency payment with respect to the purchaser 600 is possible using the received information in Operations S220 to S230.

At this point, the determination unit 340 firstly verifies whether the agency payment identification information mapped to the identification information (for example, the phone number) of the payer 100 is consistent with the agency payment identification information received from the purchaser 600 in Operation S220. When the agency payment identification information is determined to be consistent, the determination unit 340 determines whether the agency payment with respect to the agency payment request sum included in the agency payment request detail information is possible using the agency payment restriction information mapped to the identification information (for example, the phone number) of the payer 100 in Operation S230.

At this point, the determination unit 340 may determine that the agency payment with respect to the agency payment request sum is possible in only a case, for example, in which the agency payment request time point included in the agency payment request detail information is within the agency payment permissible period, the agency payment request place included in the agency payment request detail information is the agency payment permissible place, and the agency payment request sum is within the agency payment permissible limit.

Thereafter, when the agency payment with respect to the purchaser 600 is determined to be possible, the processing unit 350 processes the agency payment with respect to the agency payment request sum included in the agency payment request detail information using the registered payment means with respect to the payer 100 in Operation S240.

At this point, when the process of the agency payment is completed, the processing unit 350 transmits the process result of the agency payment to the purchaser 600 through the affiliated store device 400 and the affiliated store terminal 500, and may additionally transmit the process result of the agency payment to the payer 100 as necessary.

As described above, in accordance with the operation flow in the agency payment device 300 according to one embodiment of the present disclosure, when the purchaser 600 requests the agency payment, the agency payment with respect to the purchaser 600 is processed through a method in which the agency payment identification information previously generated by the payer 100 is verified by the purchaser 600 such that intervention of the payer 100 is not required in the process procedure of the agency payment.

In accordance with one embodiment of the present disclosure as described above, in the generation of the agency payment identification information with respect to the payer 100, it can be seen that the purchaser 600 allowed for the agency payment is not specified.

Therefore, another embodiment of the present disclosure capable of specifying the purchaser 600 allowed for the agency payment will be described below.

As shown in FIG. 2, an agency payment device 300 according to another embodiment of the present disclosure may have a configuration the same as that of one embodiment of the present disclosure, which includes a generation unit 310 for agency payment identification information of the payer 100, a designation unit 320 for designating agency payment restriction information for restricting an agency payment, a receiving unit 330 receiving an agency payment request from the purchaser 600, a determination unit 340 for determining whether process of the agency payment is possible, and a processing unit 350 for processing the agency payment.

Consequently, the agency payment device 300 according to another embodiment of the present disclosure specifies the purchaser 600 allowed the agency payment through the above described configuration to process the agency payment. Hereinafter, each configuration in the agency payment device 300 for implementing the above described procedure will be described in detail.

The generation unit 310 generates the agency payment identification information with respect to the payer 100.

More particularly, when generation of the agency payment identification information with respect to the payer 100 is requested from the service support device 200, the generation unit 310 generates the agency payment identification information required for processing the agency payment with respect to the purchaser 600.

Here, in order for the generation unit 310 to receive the generation request of the agency payment identification information from the service support device 200, operations of the affiliated store device 400 and the affiliated store terminal 500 may be intervened.

That is, when the purchaser 600 requests to transmit connection information (for example, a primary phone number of an affiliated store) of the service support device 200, which is assigned to the affiliated store device 400, to the payer 100 through the affiliated store terminal 500, the affiliated store device 400 transmits the connection information (for example, a primary phone number of an affiliated store) of the service support device 200 and identification information (for example, a phone number, and hereinafter, referred to as 'purchaser identification information') of the purchaser 600 to the payer 100.

Therefore, the payer 100 may connect to the service support device 200 (for example, through an ARS voice call and an outgoing of an SMS) using the connection information (for example, the primary phone number of the affiliated store) of the service support device 200, which is received from the affiliated store device 400, and may generate the agency payment identification information according to a series of procedures guided by the service support device 200.

At this point, the generation unit 310 receives the identification information (for example, the phone number) of the payer 100, the connection information (for example, the primary phone number of the affiliated store) of the service support device 200, and the agency payment permissible period and the agency payment permissible limit, which are designated by the payer 100, from the service support device 200.

Here, the identification information (for example, the phone number) of the payer 100 may be used for verifying whether the agency payment identification information of the payer 100 is consistent with the identification information in the determination unit 340 in the following procedure. Also, the purchaser identification information may be used for the purchaser 600 requesting the agency payment to make the payer 100 verify whether the agency payment is allowed.

Further, the connection information (for example, the primary phone number of the affiliated store) of the service support device 200 is used for designating the agency payment permissible place at which the agency payment is allowed (that is, the affiliated store) in the designation unit 320 in the following procedure. The agency payment permissible place together with the agency payment permissible period and the agency payment permissible limit, which are described above, may be used as agency payment restriction information for restricting the agency payment with respect to the purchaser 600.

Further, when a payment means of the payer 100 is not registered, the generation unit 310 receives the payment means of the payer 100 through the service support device 200, registers the received payment means, and transmits the registered information to the processing unit 350.

The designation unit 320 serves to designate the agency payment restriction information.

More particularly, when the generation of the agency payment identification information with respect to the payer 100 is completed, the designation unit 320 designates the agency payment restriction information for restricting the agency payment with respect to the purchaser 600.

In this connection, the designation unit 320 receives the agency payment identification information, the identification information (for example, the phone number) of the payer 100, the connection information (for example, a primary phone number of an affiliated store) of the service support device 200, the purchaser identification information, and the agency payment permissible period and the agency payment permissible limit, which are designated by the payer 100, from the generation unit 310.

At this point, the designation unit 320 uses the connection information (for example, a primary phone number of an affiliated store) of the service support device 200 as the agency payment permissible place at which the agency payment is allowed (that is, the affiliated store), and designates the agency payment permissible place together with the agency payment permissible period and the agency payment permissible limit as the agency payment restriction information for restricting the agency payment of the purchaser 600.

Further, when the designation of the agency payment restriction information is completed, the designation unit 320 transmits the agency payment identification information to the purchaser 600, and also maps the agency payment information and the agency payment identification information of the payer 100, which is transmitted from the generation unit 310, together with the purchaser identification information to the identification information (for example, the phone number) of the payer 100 to transmit the mapped information to the determination unit 340.

The receiving unit 330 serves to receive an agency payment request with respect to the purchaser 600.

More particularly, when the agency payment is requested from the purchaser 600, the receiving unit 330 receives the agency payment request with respect to the purchaser 600 through the affiliated store terminal 500 and the affiliated store device 400.

At this point, the receiving unit 330 receives the identification information (for example, the phone number) of the payer 100, the identification information (that is, the purchaser identification information) of the purchaser 600, the agency payment identification information previously recognized by the purchaser 600, and the agency payment request detail information through the affiliated store terminal 500 and the affiliated store device 400, and transmits the received information to the determination unit 340.

Here, the agency payment request detail information may include, for example, an agency payment request time point that is a time point at which the agency payment is requested from the purchaser 600, the agency payment request place at which purchase behavior related to the agency payment is performed, and the agency payment request sum that is a sum to be paid due to the purchase behavior.

For reference, the identification information (for example, the phone number) of the payer 100 may be received through a method, for example, in which the purchaser 600 inputs through a keypad provided at the affiliated store terminal 500. The agency payment identification information may be received through methods, for example, in which the purchaser 600 inputs through a keypad provided at the affiliated store terminal 500 and the affiliated store terminal 500 recognizes the agency payment identification information in the form of a bar code.

The determination unit 340 serves to determine whether the agency payment with respect to the purchaser 600 is possible.

More particularly, when receiving the identification information (for example, the phone number) of the payer 100, the identification information of the purchaser 600, the agency payment identification information previously recognized by the purchaser 600, and the agency payment request detail information from the receiving unit 330 that receives the agency payment request of the purchaser 600, the determination unit 340 determines whether the agency payment with respect to the purchaser 600 is possible using the received information.

That is, the determination unit 340 firstly verifies whether the agency payment identification information mapped to the identification information (for example, the phone number) of the payer 100 is consistent with the agency payment identification information received from the purchaser 600, and whether the agency payment identification information mapped to the identification information (for example, the phone number) of the payer 100 is consistent with the identification information of the purchaser 600 that requests the agency payment. When the information is consistent with each other, the determination unit 340 determines whether the agency payment with respect to the agency payment request sum included in the agency payment request detail information is possible using the agency payment restriction information mapped to the identification information (for example, the phone number) of the payer 100.

At this point, the determination unit 340 may determine that the agency payment with respect to the agency payment request sum is possible in only a case, for example, in which the agency payment request time point included in the agency payment request detail information is within the agency payment permissible period, the agency payment request place included in the agency payment request detail information is the agency payment permissible place, and the agency payment request sum is within the agency payment permissible limit.

The processing unit 350 serves to process the agency payment with respect to the purchaser 600.

More particularly, when the agency payment with respect to the purchaser 600 is determined to be possible, the processing unit 350 processes the agency payment with respect to the agency payment request sum included in the agency payment request detail information using the registered payment means with respect to the payer 100.

At this point, when the process of the agency payment is completed, the processing unit 350 transmits the process result of the agency payment to the purchaser 600 through the affiliated store device 400 and the affiliated store terminal 500, and may additionally transmit the process result of the agency payment to the payer 100 as necessary.

As described above, in accordance with the agency payment device 300 according to another embodiment of the present disclosure, the agency payment with respect to the purchaser 600 is processed through the method in which the agency payment identification information previously generated by the payer 100 is verified from the purchaser 600 in only a case in which the agency payment is requested by the specific purchaser 600 who is allowed to the agency payment such that intervention of the payer 100 is not required in a process procedure of the agency payment.

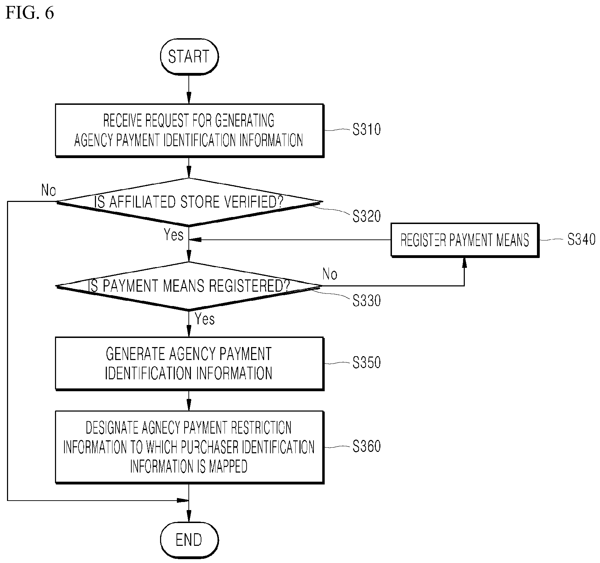

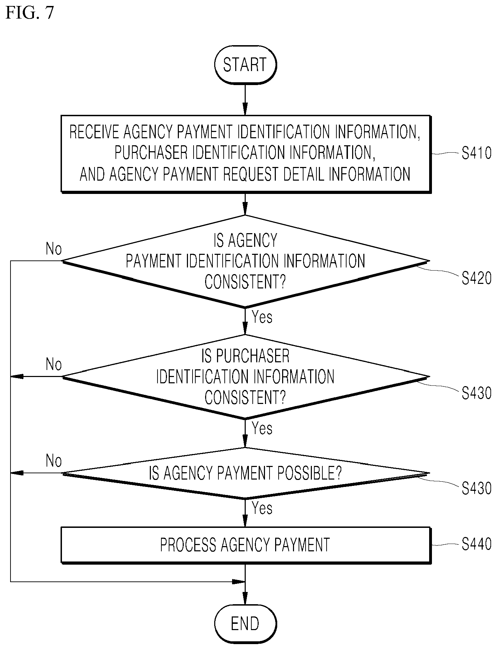

Hereinafter, an operation flow in the agency payment device 300 according to another embodiment of the present disclosure will be described with reference to FIGS. 6 and 7.

Firstly, an operation flow for generating agency payment identification information in the agency payment device 300 according to another embodiment of the present disclosure will be described below with reference to FIG. 6.

When generation of agency payment identification information with respect to the payer 100 is requested from the service support device 200, the generation unit 310 firstly generates the agency payment identification information required for processing an agency payment with respect to the purchaser 600 in Operations S310 to S360.

At this point, the generation unit 310 receives identification information (for example, a phone number) of the payer 100, connection information (for example, a primary phone number of an affiliated store) of the service support device 200, purchaser identification information, and an agency payment permissible period and the agency payment permissible limit, which are designated by the payer 100, from the service support device 200.

Here, the generation unit 310 may verify the affiliated store capable of processing the agency payment from the connection information (for example, the primary phone number of the affiliated store) of the service support device 200 in Operation S320. When the affiliated store is not verified from the connection information (for example, the primary phone number of the affiliated store) of the service support device 200, the generation unit 310 terminates the generation procedure of the agency payment identification information.

Meanwhile, to process the agency payment with respect to the purchaser 600, it is a premise that a payment means (for example, a credit card and payment points) of the payer 100 should be registered in advance.

For this purpose, when the payment means of the payer 100 is not registered, the generation unit 310 receives the payment means of the payer 100 through the service support device 200, registers the received payment means, and transmits the registered information to the processing unit 350 in Operations S330 and S340.

Thereafter, when the generation of the agency payment identification information with respect to the payer 100 is completed, the designation unit 320 designates agency payment restriction information for restricting the agency payment with respect to the purchaser 600 in Operation S360.

In this connection, the designation unit 320 receives the agency payment identification information, the identification information (for example, the phone number) of the payer 100, the connection information (for example, the primary phone number of the affiliated store) of the service support device 200, the purchaser identification information, and the agency payment permissible period and the agency payment permissible limit, which are designated by the payer 100, from the generation unit 310.

At this point, the designation unit 320 uses the connection information (for example, the primary phone number of the affiliated store) of the service support device 200 as an agency payment permissible place at which the agency payment is allowed (that is, the affiliated store), and designates the agency payment permissible place together with the agency payment permissible period and the agency payment permissible limit as the agency payment restriction information for restricting the agency payment of the purchaser 600.

Further, when the designation of the agency payment restriction information is completed, the designation unit 320 transmits the agency payment identification information to the purchaser 600, and also maps the agency payment information and the agency payment identification information of the payer 100 transmitted from the generation unit 310 together with the purchaser identification information to the identification information (for example, the phone number) of the payer 100 to transmit the mapped information to the determination unit 340.

Hereinafter, an operation flow for processing the agency payment in the agency payment device 300 according to another embodiment of the present disclosure will be described with reference to FIG. 7.

Firstly, when the agency payment is requested from the purchaser 600, the receiving unit 330 receives an agency payment request with respect to the purchaser 600 through the affiliated store terminal 500 and the affiliated store device 400 in Operation S410.

At this point, the receiving unit 330 receives the identification information (for example, the phone number) of the payer 100, the identification information (that is, purchaser identification information) of the purchaser 600, the agency payment identification information previously recognized by the purchaser 600, and agency payment request detail information through the affiliated store terminal 500 and affiliated store device 400, and then transmits the received information to the determination unit 340.

Here, the agency payment request detail information may include, for example, an agency payment request time point that is a time point at which the agency payment is requested from the purchaser 600, the agency payment request place at which purchase behavior related to the agency payment is performed, and the agency payment request sum that is a sum to be paid due to the purchase behavior.

For reference, the identification information (for example, the phone number) of the payer 100 may be received through a method, for example, in which the purchaser 600 inputs through a keypad provided at the affiliated store terminal 500. The agency payment identification information may be received through methods, for example, in which the purchaser 600 inputs through a keypad provided at the affiliated store terminal 500 and the affiliated store terminal 500 recognizes the agency payment identification information in the form of a bar code.

Thereafter, when receiving the identification information (for example, the phone number) of the payer 100, the identification information of the purchaser 600, the agency payment identification information previously recognized by the purchaser 600, and the agency payment request detail information from the receiving unit 330 that receives the agency payment request of the purchaser 600, the determination unit 340 determines whether the agency payment with respect to the purchaser 600 is possible using the received information in Operations S420 to S430.

At this point, the determination unit 340 firstly verifies whether the agency payment identification information mapped to the identification information (for example, the phone number) of the payer 100 is consistent with the agency payment identification information received from the purchaser 600 in Operation S420 and whether the purchaser identification information mapped to the identification information (for example, the phone number) of the payer 100 is consistent with the identification information of the purchaser 600 that requests the agency payment in Operation S430. When all the information is consistent with each other, the determination unit 340 determines whether the agency payment with respect to the agency payment request sum included in the agency payment request detail information is possible using the agency payment restriction information mapped to the identification information (for example, the phone number) of the payer 100 in Operation S440.

At this point, the determination unit 340 may determine that the agency payment with respect to the agency payment request sum is possible in only a case, for example, in which the agency payment request time point included in the agency payment request detail information is within the agency payment permissible period, the agency payment request place included in the agency payment request detail information is the agency payment permissible place, and the agency payment request sum is within the agency payment permissible limit.

Thereafter, when the agency payment with respect to the purchaser 600 is determined to be possible, the processing unit 350 processes the agency payment with respect to the agency payment request sum included in the agency payment request detail information using the registered payment means with respect to the payer 100 in Operation S450.

At this point, when the process of the agency payment is completed, the processing unit 350 transmits the process result of the agency payment to the purchaser 600 through the affiliated store device 400 and the affiliated store terminal 500, and may additionally transmit the process result of the agency payment to the payer 100 as necessary.

As described above, in accordance with the operation flow of the agency payment device 300 according to another embodiment of the present disclosure, the agency payment with respect to the purchaser 600 is processed through the method in which the agency payment identification information previously generated by the payer 100 is verified from the purchaser 600 in only a case in which the agency payment is requested by the specific purchaser 600 who is allowed to the agency payment such that intervention of the payer 100 is not required in a process procedure of the agency payment.

The functional operations and implementations of the subject matter described herein may be implemented as digital electronic circuitry, or may be implemented in computer software, firmware, hardware, including the structures disclosed herein and structural equivalents thereof, or one or more combinations thereof. Implementations of the subject matter described herein may be implemented in one or more computer program products, in other words, one or more modules of computer program instructions encoded on a tangible program storage medium to control operation of a processing system or to be executed by the processing system

The computer-readable medium may be a machine-readable storage device, a machine-readable storage substrate, a memory device, a composition of material that affects the machine-readable radio wave type signal, or one or more combinations thereof

As used herein, "system" or "device" includes all kinds of apparatuses and machines for processing data including, for example, a programmable processor, a computer, a multiprocessor, or a computer. In addition to the hardware, the processing system may include, e.g., a code configuring processor firmware, and a code configuring an execution environment for the computer program upon request of, for example, a protocol stack, a database management system, an operating system, or one or more combinations thereof, or the like

A computer program (also known as a program, software, a software application, a script or a code) may be written in any form of a programming language including a compiled or interpreted language, or a priori or procedural language, and may be deployed in any form including independent programs or modules, components, subroutines, or other units suitable for use in a computer environment. The computer program may not necessarily correspond to a file in a file system. The program may be stored in a single file provided to the requested program, in multiple interactive files (for example, a file storing one or more modules, subprograms or portions of a code), or in a part of a file (for example, one or more scripts stored in a markup language document) containing other programs or data. The computer program may be located on one site or distributed across multiple sites such that it is deployed to run on multiple computers interconnected by a communications network or on one computer.

The computer readable media suitable for storing computer program instructions and data may include, for example, semiconductor memory devices such as an EPROM, an EEPROM and flash memory devices, all sort of non-volatile memories including magnetic disks such as internal hard disks or external disks, magnetic optical discs, and CD-ROM and DVD-ROM disks, a media, and memory devices. A processor and a memory may be supplemented by special purpose logic circuits or integrated therewith.

Implementations of the subject matter described herein may be realized on an arithmetic system including, for example, a back-end component such as a data server, a middleware component such as an application server, a front-end component such as a client computer with a web browser or a graphical user interface allowing a user to interact with the implementations of the subject matter described herein, or one or more combinations of the back-end component, the middleware component, and the front-end component. The components of the system may be interconnected by any form or medium of digital data communications such as, for example, a communication network.

While the present disclosure includes a number of specific implementation details, they are not to be construed as limitations on any invention or the claimable scope. Rather, it should be understood as a description of features that may be specific to a particular embodiment of a particular invention. Similarly, the specific features described herein in the context of individual embodiments may be implemented in combination in a single embodiment. Alternatively, various features described in the context of a single embodiment may also be implemented in multiple embodiments individually or in any suitable sub-combination. Further, although the features may be described as operating in a particular combination and initially claimed as such, one or more features from the claimed combination may in some cases be excluded from the combination, and the claimed combination may be altered to a variant of a sub-combination or sub-combination.

Also, while the present disclosure illustrates operations in the drawings in a particular order, it should not be understood that such operations must be performed in that particular order or sequential order shown in the drawings in order to obtain a desired result, or that all illustrated operations should be performed. In certain cases, multitasking and parallel processing may be advantageous. Also, the separation of the various system components of the above described embodiments should not be understood as requiring such separation in all embodiments, and it should be understood that the program components and systems described above may generally be integrated together into a single software product or packaged into multiple software products.

As such, the present disclosure is not intended to limit the inventions to the specific terms disclosed herein. Thus, although the present disclosure has been described in detail with reference to the above examples, those skilled in the art would conceive alternations, modifications, and deformations on these examples without departing from the scope of the present disclosure. The scope of the present disclosure is defined by the appended claims rather than the description, and it should be construed that all alternations and modifications derived from the meaning and scope of the appended claims and their equivalents are included within the scope of the present disclosure.

## Claims

1. An agency payment device comprising:
a receiving unit configured to receive agency payment identification information and agency payment request detail information in connection with an agency payment request of a purchaser;
a determination unit configured to determine whether an agency payment with respect to an agency payment request sum included in the agency payment request detail information is possible on the basis of agency payment restriction information designated by a payer when the agency payment identification information is verified to be consistent with specific agency payment identification information generated by the payer; and
a processing unit configured to process an agency payment with respect to the agency payment request sum using a registered payment means of the payer when the agency payment is determined to be possible.

2. The agency payment device of claim 1, wherein the agency payment restriction information includes at least one among agency payment permissible period, agency payment permissible place, and agency payment permissible limit designated by the payer.

3. The agency payment device of claim 2, wherein the determination unit determines that the agency payment is possible in a case in which an agency payment request time point included in the agency payment request detail information is within the agency payment permissible period, an agency payment request place included in the agency payment request detail information is the agency payment permissible place, or the agency payment request sum is within the agency payment permissible limit.

4. The agency payment device of claim 3, wherein, when receiving agency payment identification information generated by a first payer and agency payment identification information generated by a second payer together in connection with the agency payment request of the purchaser, the processing unit processes the agency payment with respect to at least sum of the agency payment request sum using a registered payment means of the first payer, and with respect to the remaining sum except the at least sum of the agency payment request sum using a registered payment means of the second payer.

5. The agency payment device of claim 4, wherein the at least sum includes a sum of the agency payment request sum within the agency payment permissible limit related to the first payer, and the remaining sum includes a sum of the agency payment request sum exceeding the agency payment permissible limit related to the first payer.

6. The agency payment device of claim 4, wherein the at least sum and the remaining sum are divided and determined from the agency payment request sum according to an agency payment process ratio designated by the purchaser or the payer.

7. An agency payment device comprising:
a receiving unit configured to receive agency payment identification information and purchaser identification information in connection with an agency payment request of a purchaser; and
a processing unit configured to process an agency payment with respect to the purchaser using a registered payment means of a payer when the agency payment identification information is consistent with specific agency payment identification information generated by the payer on the basis of the purchaser identification information.

8. An operating method of an agency payment device, comprising:
receiving agency payment identification information and an agency payment request detail information in connection with an agency payment request of a purchaser;
determining whether an agency payment with respect to an agency payment request sum included in the agency payment request detail information is possible on the basis of agency payment restriction information designated by a payer when the agency payment identification information is verified to be consistent with specific agency payment identification information generated by the payer; and
processing an agency payment with respect to the agency payment request sum using a registered payment means of the payer when the agency payment is determined to be possible.

9. The operating method of claim 8, wherein the agency payment restriction information includes at least one among an agency payment permissible period, an agency payment permissible place, and an agency payment permissible limit which are designated by the payer.

10. The operating method of claim 9, wherein the determining determines that the agency payment is possible in a case in which an agency payment request time point included in the agency payment request detail information is within the agency payment permissible period, an agency payment request place included in the agency payment request detail information is the agency payment permissible place, or the agency payment request sum is within the agency payment permissible limit.

11. The operating method of claim 10, wherein when receiving agency payment identification information generated by a first payer and agency payment identification information generated by a second payer together in connection with the agency payment request of the purchaser, the processing processes the agency payment with respect to at least sum of the agency payment request sum using a registered payment means of the first payer, and with respect to the remaining sum except the at least sum of the agency payment request sum using a registered payment means of the second payer.
